# EUROPÄISCHE PATENTSCHRIFT

(11) **EP 1 254 810 B1**
(45) Veröffentlichungstag und Bekanntmachung des Hinweises auf die Patenterteilung: **11.01.2006**
(21) Anmeldenummer: 02007468.8
(22) Anmeldetag: 30.03.2002
(51) Int. Cl.: B60R 13/10, B60R 13/00, B60Q 1/00

(54) **Kraftfahrzeug-Leuchteinheit mit Erkennungszeichen**
Automotive vehicle lighting unit, bearing identifying information
Unité d'éclairage d'automobile pourvue d'une information d'identification

(30) Priorität: 02.05.2001 DE 10121387
(43) Veröffentlichungstag der Anmeldung: 06.11.2002
(73) Patentinhaber: DaimlerChrysler AG, 70567 Stuttgart (DE)
(72) Erfinder: Futschik, Hans-Dieter, 75391 Gechingen (DE); Weber, Norbert, 71149 Bondorf (DE); Nuber, Walter, 73033 Göppingen (DE)

(56) Entgegenhaltungen:
- EP-A- 0 791 911
- DE-U- 29 912 504
- GB-A- 2 024 486
- PATENT ABSTRACTS OF JAPAN vol. 1995, no. 04, 31. Mai 1995 (1995-05-31) & JP 07 002017 A (MITSUBISHI MOTORS CORP;OTHERS: 01), 6. Januar 1995 (1995-01-06)
- PATENT ABSTRACTS OF JAPAN vol. 016, no. 290 (M-1272), 26. Juni 1992 (1992-06-26) & JP 04 078629 A (NISSAN MOTOR CO LTD), 12. März 1992 (1992-03-12)

## Beschreibung

Die Erfindung betrifft eine Leuchteinheit für Kraftfahrzeuge der im Oberbegriff des Patentanspruchs 1 angegebenen Art.

Bei einer solchen, aus der EP 0791 911 A2 bekannten Leuchteinheit mit einer einem Reflektor zugeordnetem Lichtquelle ist in einem Ausführungsbeispiel eine plankonvexe Linse vorgesehen, deren Planarseite der Lichtquelle zugewandt ist. Auf besagter Planarseite ist als Erkennungszeichen ein Emblem eingebracht.

Das Emblem ist für einen außenstehenden Betrachter jedoch nur gut sichtbar, wenn sich dieser zumindest annähernd mittig vor der Leuchteinheit befindet. Sobald der Betrachter die Leuchteinheit in einem schrägen Winkel betrachtet, ist das Emblem nur noch verzerrt oder zumindest nicht mehr deutlich erkennbar.

Aufgabe der Erfindung ist es daher, eine Leuchteinheit der eingangs genannten Art zu schaffen, deren Erkennungszeichen über einen erheblich größeren Betrachtungswinkel deutlich erkennbar ist.

Diese Aufgabe wird erfindungsgemäß durch eine Leuchteinheit mit den Merkmalen des Anspruchs 1 gelöst. Vorteilhafte Ausgestaltungen der Erfindung sind den übrigen Ansprüchen zu entnehmen.

Bei der als Projektionsscheinwerfer gestalteten Leuchteinheit nach der Erfindung ist deren Projektionslinse kugelsegmentförmig ausgebildet, so dass ein auf deren Planarseite angeordnetes Erkennungszeichen über einen relativ großen Betrachtungswinkel unverzerrt und deutlich erkennbar ist. Die Anordnung des Erkennungszeichens auf der Planarseite ermöglicht dabei ein relativ einfaches und verzerrungsfreies Auf- oder Einbringen oder dgl. des Erkennungszeichens beispielsweise durch ein Sandstrahlverfahren. Um dem Betrachter von verschiedensten Winkelrichtungen eine gleichermaßen gute Darstellung des Erkennungszeichens zu übermitteln, ist es zudem notwendig, dass dieses ausschließlich in einem zentrischen Bereich der Planarseite angeordnet ist. Durch diese ausschließlich zentrische Positionierung in einem angemessen kleinen Bereich ergibt sich zudem, dass bei eingeschalteter Lichtquelle deren Strahlengang keine nennenswerte Beeinträchtigung durch das Erkennungszeichen erfährt. Es ist klar, dass die kugelsegmentförmige Linse eine erhebliche Dicke und damit Wölbung aufweisen muss, damit das Erkennungszeichen auch bei schrägem Betrachtungswinkel unverzerrt erkennbar ist.

Dabei kann die Projektionslinse in einem Abstand hinter einer durchsichtigen Abdeckscheibe angeordnet sein, welche beispielsweise an einen Kraftwagenbug angepasst ist.

Ist die Lichtaustrittsöffnung der Linse von einem umlaufenden Zierring begrenzt, welcher eine der konvexen Seite der Linse gegenüberliegende Reflektionsfläche aufweist, so ergibt das reflektierte, in die Projektionslinse einfallende Tageslicht eine besonders gute Widergabe des Erkennungszeichens. Dabei kann die Reflektionsfläche des Zierrings beispielsweise silbrig-matt reflektierend oder andersartig eingefärbt sein, so dass sich eine Widergabe des Erkennungszeichens mit einem Farbanteil der Farbe der Reflektionsfläche ergibt.

Beträgt der Durchmesser des zentrischen Bereichs etwas 1/4 bis 1/3 des Linsendurchmessers, so kann zuverlässig sichergestellt werden, dass der durch die Projektionslinse hindurchtretende Strahlengang der Lichtquelle keine nennenswerte Beeinträchtigung durch das Erkennungszeichen erfährt.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in
- Fig. 1: eine ausschnittweise schematische Vorderansicht auf einen Kraftwagenbug mit einer linken vorderen Leuchteinheit, in welcher unten zwei Projektionsmodule angeordnet sind; und in
- Fig. 2: einen Schnitt entlang der Linie II-II in Fig.1 durch die Leuchteinheit und durch die beiden Projektionsmodule.

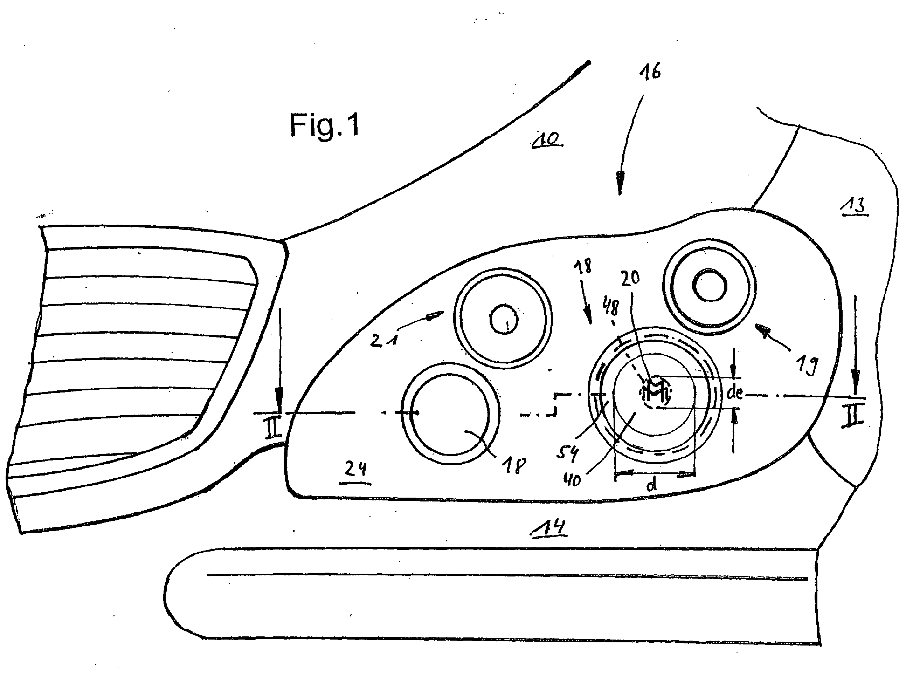

In Fig.1 ist in ausschnittweiser schematischer Vorderansicht ein Kraftwagenbug dargestellt, von dem im wesentlichen eine Motorhaube 10, ein Kühlergrill 12; ein Kotflügel 13, eine Stoßfängereinheit 14 sowie eine als Projektionsscheinwerfer dienende Leuchteinheit 16 erkennbar sind. Die Leuchteinheit 16 umfasst unten zwei im weiteren noch näher beschriebene Projektionsmodule 18, wobei nur das von vorne gesehen rechte untere Projektionsmodul 18 mit einem Erkennungszeichen 20 in Form einer Marke versehen ist. Weiter sind in die Leuchteinheit 16 ein Blinkermodul 19 und ein Reflektionsmodul 21 integriert.

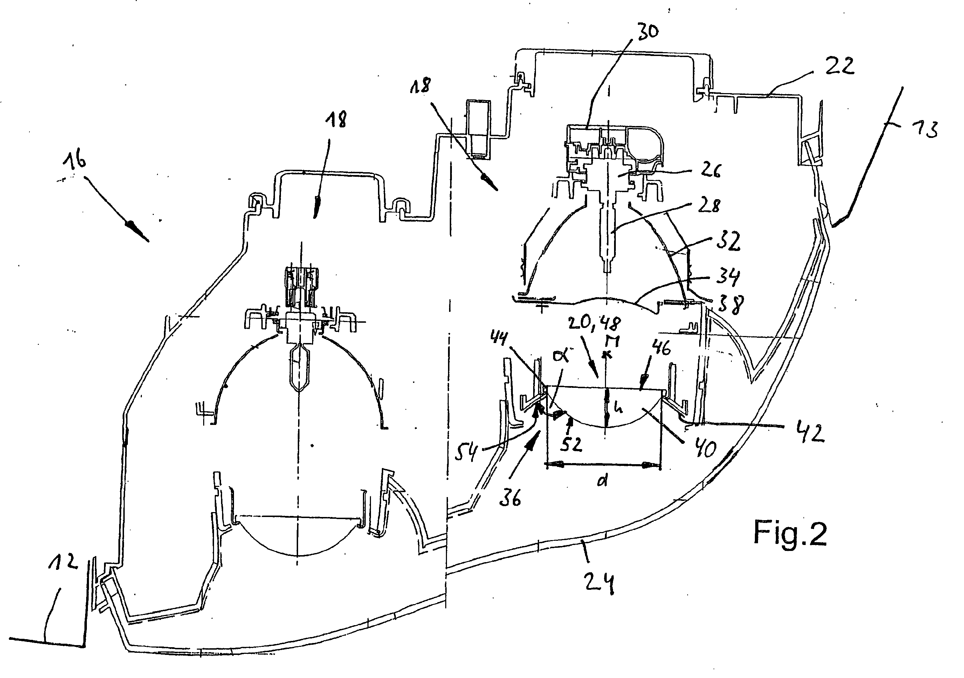

In Fig.2 ist ein Schnitt entlang der Linie II-II in Fig.1 durch die Leuchteinheit und durch die beiden Projektionsmodule dargestellt. Die Leuchteinheit umfast ein Kunststoffgehäuse 22, innerhalb dem die zwei Projektionsmodule 18 angeordnet sind. Das Gehäuse 22 ist vorne durch eine durchsichtige Abdeckscheibe 24 aus Glas oder Kunststoff verschlossen, welche an den Kraftwagenbug - wie hier im Anschlussbereich zwischen Abdeckscheibe 24 und Kotflügel 13 bzw. zwischen Abdeckscheibe 24 und Motorhaube 10 erkennbar - angepasst ist. Die Projektionsmodule 18 sind somit gegenüber dem Kraftwagenbug zurückspringend innerhalb des Gehäuses 22 angeordnet. Jedes der Projektionsmodule 18, von denen hier das die Marke 20 umfassende, von vorne gesehen rechte untere beschrieben ist, weist eine durch eine Lampenfassung 26 getragene und kontaktierte Lichtquelle 28 auf. Die Lampenfassung 26 selbst ist in einem Traggehäuse 30 aufgenommen. Die Xenon - Lichtquelle 28 ist von einem Ellipsoid - Reflektor 32 umgeben, an dessen vorderem Ende eine den Strahlengang teilweise abdeckende Abdeckblende 34 vorgesehen ist. In einem Abstand vor dem Reflektor 32 ist eine Linsenoptik 36 im Strahlengang der Lichtquelle 28 angeordnet. Insgesamt ist die Baueinheit mit Reflektor 32 und Lichtquelle 28 sowie die Linsenoptik 36 von einem Tragrahmen 38 des Projektionsmoduls 18 getragen, der in Fig.2 lediglich ausschnittweise gezeigt ist. Die Linsenoptik 36 umfasst als wesentliche Bauteile eine im wesentlichen plankonvexe Projektionslinse 20 und einen Zierring 42. Die Projektionslinse 20 ist im wesentlichen von kugelsegmentförmiger Gestalt mit einer ringförmig umlaufenden Schulter 44, über welche die Linse 20 am Tragrahmen 38 abgestützt und befestigt ist. Die Projektionslinse 20 hat hier einen Durchmesser d von etwa 70 mm und eine Höhe h von etwa 24 mm. Als besonders vorteilhaft haben sich dabei Linsen 20 erwiesen, deren Kugelsegment ein Verhältnis des Durchmessers d zur Höhe h von etwa 2:1 bis 4:1 aufweist. Es ist ersichtlich, dass ein virtueller Kugelmittelpunkt M des Kugelsegments innerhalb des Projektionsmoduls 18 - und hier zwischen der Linsenoptik 36 und dem Reflektor - zu liegen kommt.

Das Erkennungszeichen 50 ist - wie in Fig.1 gestrichelt angedeutet - ausschließlich in einem zentrischen Bereich 48 der der Lichtquelle 28 zugewandten Planarseite 46 der Projektionslinse 20 angeordnet und in deren Oberfläche beispielsweise mittels eines Sandstrahlverfahrens eingebracht. Es sind selbstverständlich auch andere, die Oberflächenrauhigkeit verändernde Verfahren zum Einbringen des Erkennungszeichens 50 denkbar; auch kann das Emblem 50 auf die Oberfläche aufgeklebt, lackiert oder dgl. aufgebracht sein. Da das Erkennungszeichen 50 auf der Planarseite 46 angeordnet ist, kann dieses auf einfache Weise verzerrungsfreie auf die Oberfläche aufgebracht werden. Durch die Positionierung ausschließlich in dem zentrischen Bereich 48 ist zudem gewährleistet, dass bei eingeschalteter Lichtquelle 28 deren Strahlengang keine nennenswerte Beeinträchtigung durch das Erkennungszeichen 50 erfährt. In dem hier gezeigten Ausführungsbeispiel ist das Erkennungszeichen 50 spiegelsymmetrisch gestaltet. Der Durchmesser de (Fig.1) des zentrischen Bereichs 48 beträgt hier etwas 20 mm und ist demgemäss vorzugsweise etwa 1/4 bis 1/3 so groß wie der Linsendurchmesser d.

Die Lichtaustrittsöffnung der Projektionslinse 20 ist von dem hier ringförmig umlaufenden Zierring 42 begrenzt, welcher eine der konvexen Seite 52 der Projektionslinse 20 gegenüberliegende Reflektionsfläche 54 aufweist. Um bei ausgeschalteter Lichtquelle 28 Tageslicht zu reflektieren, ist die Reflektionsfläche 54 hier silbrig-matt eingefärbt. Dabei ist die Reflektionsfläche 54 hier in einem Winkel α von etwa 80 bis 100°gegenüber der konvexen Seite 52 der Linse 20 radial nach außen gerichtet angeordnet. Ein Teil des durch die Reflektionsfläche 54 in die Linse 20 reflektierten Tageslichtes triff somit auf das Emblem und lässt dieses aufgrund der silbrig-matten Färbung der Reflektionsfläche 54 in demselben Farbton erscheinen. Mit anderen Worten ist die Reflektionsfläche 54 in einem gewünschten, vorzugsweise helleren Farbton einfärbbar, welcher dann in dem Erkennungszeichen 50 wiedergegeben wird. Zudem hat die Reflektionsfläche 54 die weitere Funktion, den Lichtaustritt durch die Projektionslinse 20 bei eingeschalteter Lichtquelle 28 etwas zu vergrößern.

## Patentansprüche

1. Leuchteinheit für Kraftfahrzeuge mit einer einem Reflektor (32) zugeordneten Lichtquelle (28) und mit einer im wesentlichen plankonvexen Linse (20), deren Planarseite (46) der Lichtquelle (28) zugewandt und mit einem Erkennungszeichen (50) versehen ist,
**dadurch gekennzeichnet,**
**dass** die Leuchteinheit ein Projektionsscheinwerfer mit kugelsegmentförmiger Projektionslinse (20) ist und
**dass** das Erkennungszeichen (50) ausschließlich in einem zentrischen Bereich der Planarseite (46) der Projektionslinse (20) angeordnet ist.

2. Leuchteinheit nach Anspruch 1,
**dadurch gekennzeichnet,**
**dass** die Projektionslinse (20) in einem Abstand hinter einer durchsichtigen Abdeckscheibe (24) angeordnet ist.

3. Leuchteinheit nach Anspruch 1,
**dadurch gekennzeichnet,**
**dass** die Lichtaustrittsöffnung der Projektionslinse (20) von einem umlaufenden Zierring (42) begrenzt ist.

4. Leuchteinheit nach Anspruch 3,
**dadurch gekennzeichnet,**
**dass** der Zierring (42) eine der konvexen Seite (52) der Projektionslinse (20) gegenüberliegende Reflektionsfläche (54) aufweist.

5. Leuchteinheit nach Anspruch 4,
**dadurch gekennzeichnet,**
**dass** die Reflektionsfläche (54) des Zierrings (42) von der konvexen Seite (52) der Projektionslinse (20) radial nach außen gerichtet angeordnet ist.

6. Leuchteinheit nach Anspruch 4,
**dadurch gekennzeichnet,**
**dass** die Reflektionsfläche (54) des Zierrings (42) silbrig-matt reflektierend ist.

7. Leuchteinheit nach Anspruch 1,
**dadurch gekennzeichnet,**
**dass** der Durchmesser (de) des zentrischen Bereichs (48) etwas 1/4 bis 1/3 des Linsendurchmessers (d) beträgt.

8. Leuchteinheit nach Anspruch 1,
**dadurch gekennzeichnet,**
**dass** die Leuchteinheit mehrere Projektionsmodule (18) umfasst, wobei nur die Projektionslinse (20) eines Projektionsmoduls (18) mit einem Erkennungszeichen (50) versehen ist.

9. Leuchteinheit nach Anspruch 1,
**dadurch gekennzeichnet,**
**dass** das Erkennungszeichen (50) eine Marke, ein Emblem oder dgl. ist.

10. Leuchteinheit nach Anspruch 1,
**dadurch gekennzeichnet,**
**dass** das Erkennungszeichen (50) spiegelsymmetrisch gestaltet ist.

## Claims

1. Lamp unit for motor vehicles, having a light source (28) assigned to a reflector (32), and having a substantially plano-convex lens (20) whose planar side (46) faces the light source (28) and is provided with an identification symbol (50), **characterized in that** the lamp unit is a projection headlamp with a projection lens (20) in the shape of a spherical segment and **in that** the identification symbol (50) is arranged exclusively in a central region of the planar side (46) of the projection lens (20).

2. Lamp unit according to Claim 1, **characterized in that** the projection lens (20) is arranged at a spacing behind a transparent cover plate (24).

3. Lamp unit according to Claim 1, **characterized in that** the light exit aperture of the projection lens (20) is bounded by a circumferential trim ring (42).

4. Lamp unit according to Claim 3, **characterized in that** the trim ring (42) has a reflecting surface (54) opposite the convex side (52) of the projection lens (20).

5. Lamp unit according to Claim 4, **characterized in that** the reflecting surface (54) of the trim ring (42) is arranged directed radially outwards from the convex side (52) of the projection lens (20).

6. Lamp unit according to Claim 4, **characterized in that** the reflecting surface (54) of the trim ring (42) reflects in a silver-frosted fashion.

7. Lamp unit according to Claim 1, **characterized in that** the diameter (de) of the central region (48) is approximately 1/4 to 1/3 of the lens diameter (d).

8. Lamp unit according to Claim 1, **characterized in that** the lamp unit comprises a plurality of projection modules (18), only the projection lens (20) of one projection module (18) being provided with an identification symbol (50).

9. Lamp unit according to Claim 1, **characterized in that** the identification symbol (50) is a mark, an emblem or the like.

10. Lamp unit according to Claim 1, **characterized in that** the identification symbol (50) is of mirror-symmetric shape.

## Revendications

1. Unité d'éclairage pour véhicules automobiles comprenant une source de lumière (28) associée à un réflecteur (32) et une lentille essentiellement plan-convexe (20), dont le côté plan (46) est tourné vers la source de lumière (28) et est pourvu d'une information d'identification (50),
**caractérisée en ce que**
l'unité d'éclairage est un phare avec une lentille de projection (20) en forme de segment de sphère et **en ce que** l'information d'identification (50) est disposée exclusivement dans une région centrale du côté plan (46) de la lentille de projection (20).

2. Unité d'éclairage selon la revendication 1,
**caractérisée en ce que**
la lentille de projection (20) est disposée à une certaine distance derrière une glace transparente (24).

3. Unité d'éclairage selon la revendication 1,
**caractérisée en ce que**
l'ouverture de sortie de la lumière de la lentille de projection (20) est limitée par une bague décorative périphérique (42).

4. Unité d'éclairage selon la revendication 3,
**caractérisée en ce que**
la bague décorative (42) présente une surface réfléchissante (54) opposée au côté convexe (52) de la lentille de projection (20).

5. Unité d'éclairage selon la revendication 4,
**caractérisée en ce que**
la surface réfléchissante (54) de la bague décorative (42) est disposée de manière orientée radialement vers l'extérieur depuis le côté convexe (52) de la lentille de projection (20).

6. Unité d'éclairage selon la revendication 4,
**caractérisée en ce que**
la surface réfléchissante (54) de la bague décorative (42) est réfléchissante matte argentée.

7. Unité d'éclairage selon la revendication 1,
**caractérisée en ce que**
le diamètre (de) de la région centrale (48) vaut environ 1/4 à 1/3 du diamètre de la lentille (d).

8. Unité d'éclairage selon la revendication 1,
**caractérisée en ce que**
l'unité d'éclairage comprend plusieurs modules de projection (18), seulement la lentille de projection (20) d'un module de projection (18) étant pourvue d'une information d'identification (50).

9. Unité d'éclairage selon la revendication 1,
**caractérisée en ce que**
l'information d'identification (50) est une marque, un emblème ou similaire.

10. Unité d'éclairage selon la revendication 1,
**caractérisée en ce que**
l'information d'identification (50) est configurée avec une symétrie spéculaire.
